(19) Europäisches Patentamt
European Patent Office
Office européen des brevets

(11) **EP 4 127 642 B1**

(12) **EUROPEAN PATENT SPECIFICATION**

(45) Date of publication and mention
of the grant of the patent:
**16.04.2025 Bulletin 2025/16**

(21) Application number: **20743215.4**

(22) Date of filing: **31.03.2020**

(51) International Patent Classification (IPC):
**G01M 13/045** (2019.01)   **G01M 13/021** (2019.01)
**G01M 13/028** (2019.01)

(52) Cooperative Patent Classification (CPC):
**G01M 13/045; G01M 13/021; G01M 13/028**

(86) International application number:
**PCT/IB2020/000122**

(87) International publication number:
**WO 2021/198714 (07.10.2021 Gazette 2021/40)**

(54) **MEASURING DEVICE AND GEAR FAILURE DETERMINING DEVICE**

MESSVORRICHTUNG UND VORRICHTUNG ZUR BESTIMMUNG VON GETRIEBEFEHLERN

DISPOSITIF DE MESURE ET DISPOSITIF DE DÉTERMINATION DE DÉFAILLANCE
D'ENGRENAGE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**08.02.2023 Bulletin 2023/06**

(73) Proprietors:
• **NSK Ltd.**
**Tokyo 141-8560 (JP)**
• **Technical University of Munich Department of
Mechanical Engineering**
**85748 Garching bei Muenchen (DE)**

(72) Inventors:
• **MIYATA, Shinji**
**Fujisawa-shi, Kanagawa 2518501 (JP)**
• **SUGITA, Sumio**
**Fujisawa-shi, Kanagawa 2518501 (JP)**
• **YANAGISAWA, Tomoyuki**
**Fujisawa-shi, Kanagawa 2518501 (JP)**

• **YOSHIMATSU, Osamu**
**Fujisawa-shi, Kanagawa 2518501 (JP)**
• **YANAGINO, Hiroshi**
**Fujisawa-shi, Kanagawa 2518501 (JP)**
• **OKAMURA, Toshihiko**
**Fujisawa-shi, Kanagawa 2518501 (JP)**
• **EMAMDJOMEH, Naser**
**70771 Leinfelden-Echterdingen (DE)**
• **STAHL, Karsten**
**85748 Garching bei Muenchen (DE)**
• **OTTO, Michael**
**85748 Garching bei Muenchen (DE)**
• **FROMBERGER, Maximilian**
**85748 Garching bei Muenchen (DE)**

(74) Representative: **TBK**
**Bavariaring 4-6**
**80336 München (DE)**

(56) References cited:
**EP-A1- 3 457 106        JP-A- 2019 180 183
US-A1- 2008 033 695**

## Description

### TECHNICAL FIELD

The present invention relates to a measuring device for measuring vibrations and an angular position of a bearing, for example disposed in a gearbox and a device for determining the failure of the gears mounted in the gearbox.

### BACKGROUND ART

Gears may show various kinds of fatigue and spontaneous damages depending upon time of use of the gears and other reasons. Generally, even non-damaged gear pairs induce vibration, due to time-variant mesh stiffness, amongst other reasons. This vibration excitation is changed by the presence of damage.

If the machine is a gearbox, the vibrations are transferred to the case of the gearbox across a gear bulk, shafts and bearings. One example of devices for detecting failure in gears mounted in a gearbox is disclosed in Japanese Patent Application Laid-Open Publication JP 2017-18128 A.

The device described in Japanese Patent Application Laid-Open Publication JP. 2017-181282 A includes an acceleration sensor for detecting vibrations, which are caused as two gears mesh each other. The acceleration sensor is fixed to a case of a transmission.

Furthermore, JP 2019-180183 A discloses a measuring device comprising a cover, an acceleration sensor provided on the inner side of the cover, an angle sensor provided on the inner side of the cover, and a data collecting unit provided on the inner side of the cover. Still further, US 2008/033695 A1 shows an abnormality diagnosing system for mechanical equipment, wherein sounds or vibrations generated in the mechanical system detected and processes. Moreover, EP 3 457 106 A1 refers to a method for monitoring the kinematics of an epicyclic planetary gearbox, wherein, in a training phase, a model of the kinematics is determined by pattern recognition based on data measured at the epicyclic planetary gearbox by means of a vibration sensor device.

### SUMMARY OF THE INVENTION

Part of vibration energy generated upon meshing of the gears is emitted to the outside, in the form of audible noise, from the case that houses the gears. Across the whole transfer path of the vibration energy (audible noise), the original mesh-excited vibration changes behavior as it is exposed to the transfer path properties from point of excitation towards point of picking up (location of the acceleration sensor). Thus, the vibration characteristics measured at the pick-up point are different from the vibration characteristics at the excitation point. This is due to damping and stiffness and mass properties of objects along the path of transfer, and changes the vibration time series with regard to modified amplitudes and phases across the whole frequency band.

Because the device disclosed in Japanese Patent Application Laid-Open Publication JP 2017-181282 A has the acceleration sensor that is fixedly secured to the case of the speed-increasing mechanism, the vibrations generated upon meshing of the two gears are transferred to the acceleration sensor via the case of the speed-increasing mechanism. Because the vibrations transferred to the acceleration sensor are affected by the path of the vibration transfer through the case of the speed-increasing mechanism, the vibrations measured by the acceleration sensor may be different from the vibrations at the excitation point (point of gear-meshing) in terms of vibration characteristics. In addition, the device disclosed in Japanese Patent Application Laid-Open Publication JP 2017-181282 A cannot detect failure of each gear in the speed-increasing mechanism.

An object of the present invention is to provide a technology that can accurately detect failure of gears.

According to one aspect of the present invention, as defined in claim 1, there is provided a measuring device attached to one side face of a bearing part. The bearing part supports a shaft having a gear thereon such that the shaft can rotate. The measuring device includes a cover attached to an outer ring of the bearing part to cover the side face of the bearing part, an acceleration sensor provided on an inner face of the cover to measure vibrations of the bearing part, an angle sensor provided on the inner face of the cover to measure the angle between the outer ring and an inner ring of the bearing part, and a data collecting unit provided on the inner face of the cover to obtain the acceleration measured by the acceleration sensor and the angle measured by the angle sensor in a linked manner, sharing one common time base, in the form of time-synchronous angle-acceleration pairs.

According to another aspect of the present invention, there is provided a gear failure detecting system comprising a measuring device and a gear failure determining device.

Because the acceleration sensor is attached to the bearing part, the vibration transfer path from the gear to the acceleration sensor is very short. Therefore, it is possible to accurately detect gear failure, as compared to a case where an acceleration sensor is attached to a case of a machine.

BRIEF DESCRIPTION OF THE DRAWINGS

Fig. 1 shows a gear failure determining device and a gearbox according to one embodiment of the present invention.
Fig. 2 is a block diagram to show a configuration of the gear failure determining device shown in Fig. 1.
Fig. 3 is an exploded perspective view of a first bearing shown in Fig. 1.
Fig. 4 is an exploded perspective view of a first bearing shown in Fig. 1 when viewed in a different direction.
Fig. 5A is a plan view of a cover, a coil substrate, a plurality of circuit substrates, and a rechargeable battery (accumulator) of the first bearing.
Fig. 5B shows a detail of the coil substrate shown in Fig. 5A.
Fig. 6 is a block diagram to illustrate a mechanism for self power generation.
Fig. 7 is a set of graphs to describe behaviors of a power management IC (integrated circuit).
Fig. 8 is a block diagram to show a configuration of a measuring device.
Fig. 9A to Fig. 9E are a set of timing charts to describe processing of the measuring device.
Fig. 10 shows relationship between the measured acceleration value and the measured angle value.
Fig. 11 is a flowchart to describe the processing of the measuring device.
Fig. 12A shows a gear having a simplified structure.
Fig. 12B shows an acceleration curve obtained from the gear shown in Fig. 12A.
Fig. 12C shows three per-tooth acceleration curves obtained from the acceleration curve shown in Fig. 12B.
Fig. 13 is a view to describe a failure detecting process, which is executed by the gear failure determining device.
Fig. 14 shows a map that defines relationship between an angle and a tooth when no angle offset value is used.
Fig. 15 shows a map that defines relationship between the angle and the tooth when an angle offset value is used.
Fig. 16 shows a result of experiment to confirm effectiveness of the gear failure determining device according to the embodiment of the present invention.

DETAILED DESCRIPTION OF EMBODIMENTS

A system for detecting gear failure according to an embodiment of the present invention is configured to monitor conditions of one of gears mounted in a gearbox and detect failure of the gear. The gear failure detecting system utilizes a bearing device, which has a self-power-generation function and includes a plurality of sensors, to monitor one of a plurality of gears and evaluate vibration signals from respective teeth of the gear. The bearing device has a function of rotatably supporting a shaft, which is an inherent function as a bearing, and three additional functions, i.e., self power generation, sensing, and wireless communication. The bearing device serves as a device for supporting the shaft, and also serves as a sensing device (measuring device). Because the sensing device can serve as a measuring device, the bearing device equipped with sensors may be referred to a bearing device equipped with a measuring device.

For the sake of easier description, the gearbox in the embodiment of the invention includes a single-stage gear set.

It should be noted that the scope of the present invention is not limited to the embodiment described below. The embodiment may be altered and/or modified within a scope of the present invention as defined in the claims.

The embodiment of the present invention will now be described with reference to the accompanying drawings.

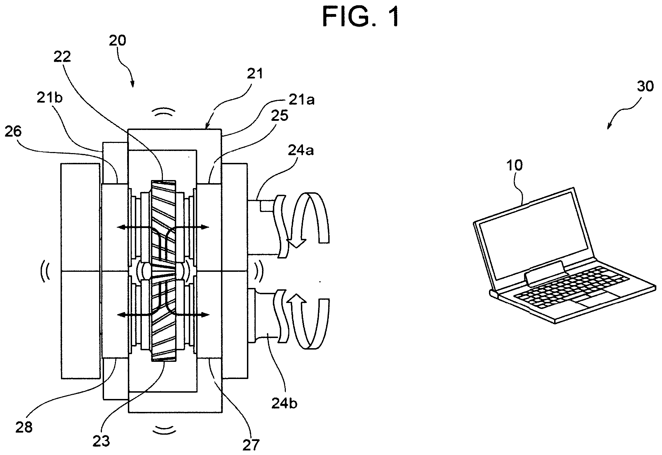

Fig. 1 illustrates a gear failure determining device 10 and a gearbox 20 according to an embodiment of the present invention. The gearbox 20 has a housing 21, a first gear 22 and a second gear 23. The first gear 22 and the second gear 23 are provided in the housing 21 and mesh each other. The housing 21 has a first wall 21a and a second wall 21b. The first wall 21a faces the second wall 21b at a predetermined distance. The gearbox 20 also has a first shaft 24a, on which the first gear 22 is mounted. The first shaft 24a is supported by a first bearing 25 at its one end, and by a second bearing 26 at its opposite end. The first bearing 25 is provided in the first wall 21a of the housing 21, and the second bearing 26 is provided in the second wall 21b of the housing 21.

The gearbox 20 also has a second shaft 24b, on which the second gear 23 is mounted. The second shaft 24b is supported by a third bearing 27 at its one end, and by a fourth bearing 27 at its opposite end. The third bearing 27 is provided in the first wall 21a of the housing 21 at a position below the first bearing 25, and the fourth bearing 28 is provided in the second wall 21b of the housing 21 at a position below the second bearing 26. In this embodiment, each of the bearing 25, 26, 27 and 28 is a rolling bearing (e.g., a conical or taper roller bearing or a deep groove ball bearing).

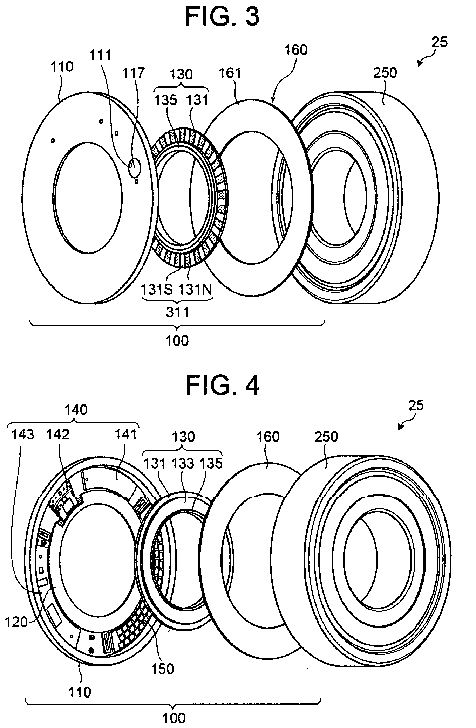

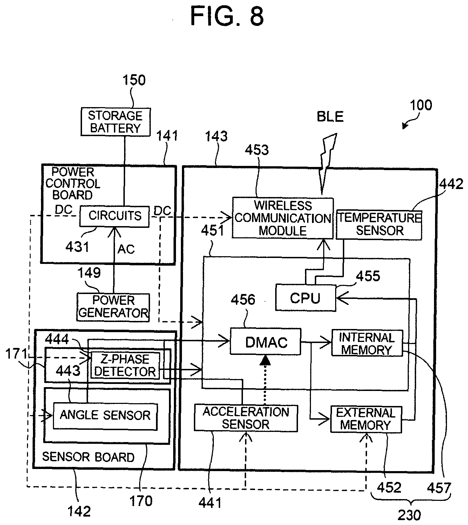

In this embodiment, only one of the four bearings 25-28, namely the first bearing 25, is a bearing equipped with a measuring device 100 (see Fig. 3). Thus, the first bearing 25 is a bearing device that has the measuring device 100. The measuring device 100 detects and measured vibrations generated as the first gear 22 meshes with the second gear 23. The measuring device 100 also detects an angular position of the first bearing 25 (i.e., angular position of the first shaft 24a). The measuring device 100 has a wireless communication unit such that the measuring device 100 communicates with the gear failure determining device 10 by wireless. The measuring device 100 also has a power generator 149 (see Fig. 8). The gear failure determining device 10 detects (determines) whether there is any failure in the first gear 22 based on signals received from the measuring device 100 of the first bearing 25. In this embodiment, the gear failure determining device 10 and the measuring device 100 constitute, in combination, a gear failure detecting system 30. Because the first bearing 25 is equipped with the measuring device 100, the first bearing 25 may be referred to as a bearing device.

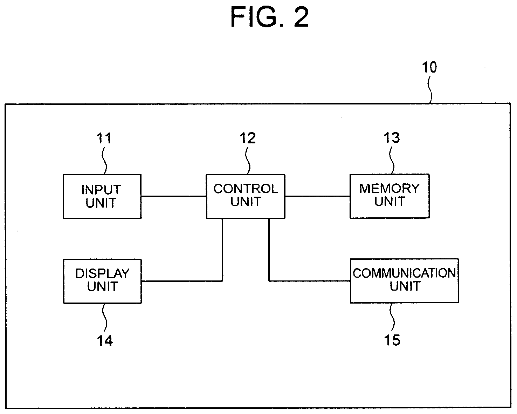

Fig. 2 is a block diagram that shows a configuration of the gear failure determining device 10. As shown in Fig. 2, the gear failure determining device 10 includes an input unit 11, a control unit 12, a memory unit 13, a display unit 14 and a communication unit 15. The gear failure determining device 10 is, for example, a personal computer.

The input unit 11 has buttons, switches, a mouse, a touch panel and other elements. A user or operator can enter various instructions, data and information into the gear failure determining device 10 with the input unit 11. For example, the user may enter the number of the teeth of the first gear 22 into the gear failure determining device 10. When the user operates the gear failure determining device 10, the user operates the input unit 11. The input unit 11 may be referred to as an operation unit.

The control unit 12 may include one or more CPUs (Central processing units) or MPUs (Microprocessor units). The control unit 12 controls the units 11 and 13-15 of the gear failure determining device 10. The control unit 12 processes signals received from the measuring device 10 to carry out the gear failure determination (perform the failure determination process). The control unit 12 controls the gear failure determining device 10 and carries out the gear failure determination by executing a control program, which is stored in the memory unit 13.

The memory unit 13 may include HDD (Hard disk drive), ROM (Read only memory), RAM (Random access memory), IC (Integrated circuit) memory card and other elements. The memory unit 13 stores the control program that is executed by the control unit 12. The memory unit 13 also stores other information such as algorithms, which are used to generate a map to define relationship between an angle (angular position) of the first gear 22 and teeth of the first gear 22. The map is generated as the control unit 12 executes the control program stored in the memory unit 13. The memory unit 13 stores data received from the measuring device 100.

The display unit 14 may include a liquid crystal display. The display unit 14 displays various data, numbers, characters and images. For example, the display unit 14 displays data received from the measuring device 100.

The communication unit 15 performs wireless communication with the measuring device 100.

Fig. 3 is an exploded perspective view of the first bearing 25 to show a configuration of the first bearing 25. Fig. 3 shows the first bearing 25 when viewed from the left. Fig. 4 is another exploded perspective view of the first bearing 25 when viewed from the right. As shown in Fig. 3, the first bearing 25 includes the measuring device 100 and a bearing part 250. The measuring device 100 is attached to a left side face of the bearing part 250. The measuring device 100 includes a cover 110, a coil substrate 120 (see Fig. 4), a rotating module 130, a circuit substrate group 140 (see Fig. 4), an accumulator battery 150, a retainer (not shown), and a Z-phase magnet unit 160. The retainer is a thin annular member, and located between the cover 110 and the Z-phase magnet unit 160. The circuit substrate group 140 includes a plurality of substrates (will be described later). The cover 110 may be a metallic cover.

The rotating module 130 is mounted on the first shaft 24a such that the rotating module 130 rotates with the first shaft 24a. When the cover 110 is attached to the bearing part 250, the cover 110 is fixed to the left side face of an outer ring (outer race) of the bearing part 250. Thus, the cover 110 does not rotate. The retainer is attached to an inner ring of the bearing part 250. The Z-phase magnet unit 160 is fixed to the inner right of the bearing part 250 by the retainer. Thus, the Z-phase magnet unit 160 rotates with the inner ring of the bearing part 250, i.e., the Z-phase magnet unit 160 rotates with the first shaft 24a.

The cover 110 is a flat annular member, and may be made from a magnetic material such as silicon steel, carbon steel (JIS, SS400 or S45C), martensitic stainless steel (JIS, SUS420) or ferrite-based stainless steel (JIS SUS430). Because a plurality of sensors are attached to an inner face of the cover 110 (will be described), the cover 110 may be referred to as a casing for the sensors or a sensor case.

As shown in Fig. 4, the coil substrate 120, the circuit substrate group 140 and the accumulator battery 150 are attached onto the inner face of the cover 110 (i.e., the face that is directed toward the bearing part 250). The circuit substrate group 140 includes a power source control substrate 141, an angle sensor substrate 142, and a control substrate 143. The power source control substrate 141, the angle sensor substrate 142, and the control substrate 143 are fixed to the cover 110 as bolts, which are made from a nonmagnetic material such as brass, are screwed into female bores formed in the cover 110. The lengths of the bolts are decided such that the bolts do not protrude from the cover 110.

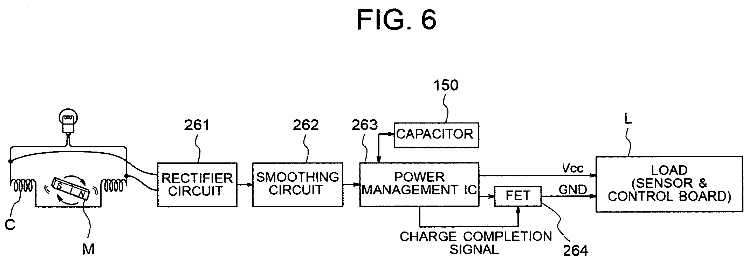

The power source control substrate 141 includes a rectifier circuit 261 (Fig. 6), a smoothing circuit 262 (Fig. 6), a power management IC 263 (Fig. 6) and an FET (Field effect transistor) 264 (Fig. 6). The circuits 261-263 and the FET 264 of the power source control substrate 141 will be describe with Fig. 6.

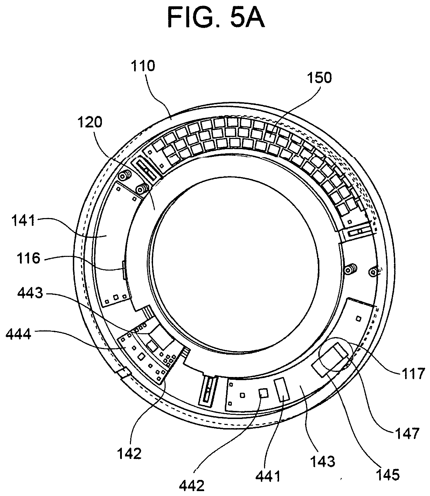

The cover 110 has a through hole 111. The through hole 111 is closed by a lid 117, which is made from a nonmagnetic material such as resin. An antenna 147 (see Fig. 5A) is disposed on the control substrate 143 (will be described). The cover 110 is magnetized, and shields the electromagnetic wave emitted from the antenna 147. However, the antenna 147 is provided at a position that faces the lid 117. Thus, the electromagnetic wave emitted from the antenna 147 can reach the gear failure determining device 10 through the nonmagnetic lid 117.

The coil substrate 120 is attached to the cover 110 by, for example, an adhesive.

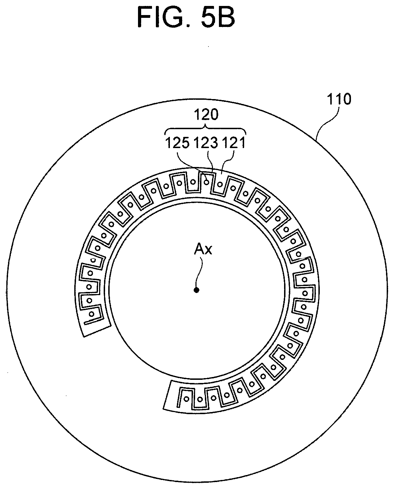

Fig. 5A is a plan view to show an exemplary configuration of the cover 110, the coil substrate 120, the circuit substrate group 140, and the accumulator battery 150. Fig. 5B only shows the outer boundary (outer contour) of the cover 110 and the coil substrate 120. As shown in Fig. 5B, the coil substrate 120 includes a flexible substrate 121, a coil pattern 123 disposed on the flexible substrate 121, and a plurality of yokes 125 disposed on the flexible substrate 121. It should be noted that the yokes 125 may be dispensed with. When viewed from the top, the flexible substrate 121 has a generally annular shape, with a rotation center Ax of the first shaft 24a being the center of the annular shape. The coil pattern 123 has a plurality of flat coils, which are piled up in the thickness direction of the flexible substrate 121. The flat coil is a pattern of electric conductor formed on a predetermined surface (or surfaces) of an insulator by a patterning process. In this embodiment, a plurality of conductor patterns are formed on a plurality of surfaces of the insulator. It should be noted that the conductor pattern may be formed on a single surface of the insulator. The number of turns of the coil pattern 123 is proportional to the number of piling up of the flat coils. An amount of power generation may be adjusted by changing the number of piling up of the flat coils.

When viewed from the top, the coil pattern 123 alternately has protrusions and recesses in a circumferential direction around the rotation center Ax. Each yoke 125 is situated in each recess. The coil pattern 123 may have a cutout portion in order to place the angle sensor at a position that can detect a change in magnetism of an encoder magnet (will be described).

As illustrated in Fig. 5A, the power source control substrate 141, the angle sensor substrate 142, the control substrate 143 and the accumulator battery 150 are situated outside the coil substrate 120, when viewed from the top. The power source control substrate 141 (i.e., a power management IC 263, which will be described later in detail) has two DC-DC converters (i.e., a step-up DC-DC converter and a step-down DC-DC converter). The power source control substrate 141 can decrease a DC voltage, supplied from the accumulator battery (capacitor) 150, and feed the DC voltage to the angle sensor substrate 142 and the control substrate 143.

An angle sensor 443 and a Z-phase detector 444 are mounted on the sensor substrate 142. The Z-phase detector 444 is, for example, a hall IC. The Z-phase detector 444 generates one pulse as a Z-phase magnet 162 (will be described) passes by the Z-phase detector 444. In other words, the Z-phase detector 444 generates a single pulse every time the first bearing 25 rotates 360 degrees.

The control circuit 145, the antenna 147, the acceleration sensor 441 and the temperature sensor 442 are provided on the control substrate 143. It should be noted that the acceleration sensor 441, the temperature sensor 442, the angle sensor 443, the control circuit 145 and the antenna 147 may be provided in the form of separate IC chips, respectively. Alternatively, part or all of the sensors 441-443, the control circuit 145 and the antenna 147 may be provided in the form of a single IC chip. The temperature sensor 442 is used to indicate (know) the temperature when (or before) the acceleration and the angle are detected. The acceleration sensor 441 in this embodiment is, for example, an MEMS acceleration sensor.

Two opposite ends of the coil pattern 123 are electrically connected to the power source control substrate 141 via an extending portion 116, which extends from a predetermined position of the outer circumference of the coil substrate 120. It should be noted that lead wires may be used instead of the extending portion 116 to connect the coil substrate 120 to the power source control substrate 141. Alternatively, an FPC (Flexible printed circuit) connector may be used instead of the extending portion 116 to connect the coil substrate 120 to the power source control substrate 141. If the FPC connector is used, soldering becomes unnecessary, and therefore the productivity of the measuring device 100 increases.

Referring back to Fig. 3 and Fig. 4, the rotating module 130 includes an annular magnetic track 131, an annular base member 133, and an annular attaching jig 135. Preferably, the base member 133 and the attaching jig 135 are metallic and magnetized. The magnetic track 131 is provided on the left side face of the base member 133. The base member 133 has an opening. The attaching jig 135 is fixed to the right side face of the base member 133. The attaching jig 135 extends through the opening of the base member 133 from the right side face of the base member 133, and protrudes from the left side face of the base member 133. The left side face of the base member 133 faces the cover 110. It should be noted that the magnetic track 133 may be detachable from the base member 133.

In this embodiment, the magnetic track 131 and the base member 133 are, in combination, referred to as the encoder magnet. For example, the encoder magnet is prepared by forming a plastic magnet on one surface of the metallic base member 133, with N and S poles being alternately made (magnetized) on the surface of the plastic magnet. The attaching jig 135 is a jig to mount the encoder magnet (rotating module 130) on the first shaft 24a.

The magnetic track 131 has a plurality of magnetic pole pairs 311. Each magnetic pole pair 311 has an N pole 131N and an S pole 131S. The magnetic pole pairs 311 are arranged in the circumferential direction of the magnetic track 131. The N poles 131N and the S poles 131S are alternately arranged.

The distance between the center of the N pole 131N and the center of the neighboring S pole 131S of the magnetic track 131 is the same as the distance between the center of one yoke 125 and the center of the neighboring yoke 125 on the coil substrate 120.

In this embodiment, when the magnetic track 131 rotates relative to the coil substrate 120 about the center Ax (Fig. 5B), one of the two adjacent yokes 125 faces the N pole while the other yoke 125 faces the S pole. When one of the two adjacent yokes 125 faces the S pole, the other yoke 125 faces the N pole. In this manner, the two adjacent yokes 125 of the coil substrate 120 do not face the same pole of the magnetic track 131. Thus, the phase of the changing magnetic flux density that passes through one yoke 125 is shifted 180 degrees from the phase of the changing magnetic flux density that passes through the other yoke 125.

As described above, when the magnetic track 131 rotates relative to the coil substrate 120, the magnetic poles that face the yokes 125 alternately change. As a result, the densities of the magnetic fluxes that penetrate the yokes 125 change periodically. As the magnetic flux density changes periodically, the voltage change (e.g., sine-wave AC voltage) occurs in the coil pattern 123 provided around the yokes 125. In this embodiment, therefore, as the inner ring of the first bearing 25 rotates with the first shaft 24a, the power generation takes place in the first bearing 25 by means of electromagnetic induction. This power generation is self-power generation, i.e., the measuring device 100 of the first bearing 25 is self powered. In the following description, a combination of the encoder magnet (magnetic track 131) and the coil substrate 120 may be referred to as a power generator unit 149. The power generator unit 149 generates electric power based on the relative rotation between the outer ring of the first bearing 25 and the inner ring of the first bearing 25. The DC voltage generated by the first bearing 25 is accumulated in the accumulator battery 150.

The Z-phase magnetic unit 160 has a Z-phase magnet holder 161 and the Z-phase magnet (not shown). The Z-phase magnet holder 161 has a hole. The Z-phase magnet holder 161 is an annular member, and the Z-phase magnet is embedded in the hole of the Z-phase magnet holder 161. The Z-phase magnet holder 161 is metallic (e.g. made from aluminum). As the Z-phase magnet unit 160 rotates 360 degrees together with the first shaft 24a, the Z-phase magnet passes by the Z-phase detector 444 once. Then, the Z-phase detector 444 generates one pulse.

Fig. 6 schematically depicts a mechanism of the above-described self-power generation. In Fig. 6, the coil C corresponds to the coil pattern 123 provided on the cover (metallic case) 110, and the magnet M corresponds to the encoder magnet provided on the inner ring of the first bearing 25.

As shown in Fig. 6, the electromagnetic induction occurs and the electric power is generated as the coil C and the magnet M rotate relative to each other. Because the generated electricity is the AC current, the AC current is converted to the DC current by the rectifier circuit 261. The rectifier circuit 261 is, for example, a diode bridge. Because the DC current obtained from the rectifier circuit 261 may contain a pulsating current, the output of the rectifier circuit 261 is connected to the input of the smoothing circuit 262 in order to smooth the DC current in this embodiment.

The DC current, which has passed through the smoothing circuit 262, is introduced to the power management IC 263, and accumulated in the accumulator battery (capacitor) 150. Because the power management IC 263 has the two DC-DC converters (the step-up DC-DC converter and the step-down DC-DC converter), the power management IC 263 can convert (increase) a very weak electricity, which is generated by the power generator ("C" and "M" in Fig. 6), to a higher voltage, and this higher voltage is accumulated in the accumulator battery 150. The charging to the accumulator battery 150, the discharging in the case of overcharging, and feeding of a predetermined voltage Vcc to the load L (sensors and circuit boards) are controlled by the power management IC 263.

To avoid an infinite voltage from entering the load L, which would otherwise make the control circuit 143 uncontrollable, the FET 264 is provided between the power management IC 263 and the load L. The FET 264 can completely stop the power feeding to the load L.

The electric power generated by the rotation of the first shaft 24a (i.e., by the relative rotations between the coil substrate 120 and the magnetic track 131) is very small. Thus, the power management IC 263 used in this embodiment is, for example, a circuit that has an energy harvesting capability. Such circuit can accumulate the electric power even when the generated electric power is very small. One example of such circuit is "Ultra low power harvester power management IC, BQ25570" manufactured by Texas Instruments Incorporated.

The accumulator battery 150 has a condenser capacity that is, at least, enough for the measuring device 100 to perform a single operation. The single operation of the measuring device 100 is an operation from measuring the angular position of the gear tooth and the acceleration of the gear tooth for a predetermined period of time (e.g., one second) to sending the measurement results to the gear failure determining device 10.

When the charging to the accumulator battery 150 is complete, the power management IC 263 sends a "charging complete" signal to the FET 264, which informs a fact that the charging to the accumulator battery 150 is complete.

When the ESR (Equivalent Series Resistance) of the accumulator battery 150 decreases, an amount of electric current that can be instantaneously extracted increases. Thus, preferably, the accumulator battery 150 has a low ESR. If the accumulator battery 150 does not have a low ESR, a capacitor may be provided in parallel to the accumulator battery 150, or an all solid state battery may be provided in parallel to the accumulator battery 150.

It should be noted that the rectifier circuit 261, the smoothing circuit 262, the power management IC 263 and the FET 264 may collectively be referred to as a circuit group 431 (see Fig. 8).

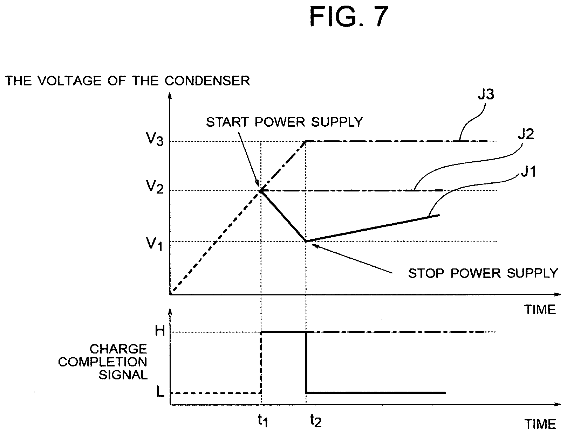

Fig. 7 shows two graphs, which are useful to describe the behavior of the power management IC 263. In the upper graph of Fig. 7, the vertical axis represents the voltage of the accumulator battery 150, and the horizontal axis represents the time. The lower graph of Fig. 7 shows the charging complete signal. The vertical axis of the lower graph represents the intensity of the signal (High or Low), and the horizontal axis represents the time. When the charging complete signal is low, the charging to the accumulator battery 150 is not complete (charging state). When the charging complete signal is high, the accumulator battery 150 feeds the electricity (power supply state). When the charging complete signal moves to Low from High, it indicates that the accumulator battery 150 stops (finishes) the power supply and enters the charging state. The charging complete signal is a signal generated by the power management IC 263. When the two graphs in Fig. 7 are looked at simultaneously, one can understand what control the power management IC 263 performs with regard to the voltage of the accumulator battery 150.

As shown in Fig. 7, when the charging complete signal is Low, an amount of charge accumulated in the accumulator battery 150 increases with time. Eventually, when the time t1 is reached, the charging complete signal becomes High. The voltage of the accumulator battery 150 is V2 at the time t1. The voltage V2 is a voltage that starts (triggers) the power supply to the load L.

After the time t1 (after the power supply to the load L starts), the voltage drops from V2 if an amount of electricity consumed by the load L is greater than an amount of power generation, as indicated by the line J1. When the voltage drops to V1, the power management IC 263 stops the power supply to the load L. V1 may be equal to Vcc or slightly higher than Vcc. If V1 is lower than Vcc, the power management IC 236 would not function as a converter.

After the time t1, the voltage maintains V2 if an amount of electricity consumed by the load L is equal to an amount of power generation, as indicated by the line J2.

After the time t1, the voltage rises from V2 if an amount of electricity consumed by the load L is smaller than an amount of power generation, as indicated by the line J3. When the voltage reaches V3, the power management IC 263 stops the charging to the accumulator battery 150 in order to prevent the overcharging.

In this embodiment, the accumulator battery 150 has a capacity that is sufficient for the measuring device 100 to perform a single operation. Specifically, the accumulator battery 150 ensures that the measuring device 100 can finish the single operation between the time t1 and the time t2, even if the voltage drops to V1 from V2 between the time t1 and the time t2 in Fig. 7. The accumulator battery 150 can feed electricity to the measuring device 100 between the time t1 and the time t2, and the measuring device 100 can measure and send the acceleration data and the angle data to the device 10 between the time t1 and the time t2.

Fig. 8 is a block diagram that shows the configuration of the measuring device 100. As described above, the measuring device 100 includes the power source control substrate 141, the angle sensor substrate 142, and the control substrate 143. The angle sensor substrate 142 includes the sensor substrate 170 and the Z-phase detector substrate 171.

The power source control substrate 141 has the circuit group 431. The circuit group 431 includes the he rectifier circuit 261, the smoothing circuit 262, the power management IC 263 and the FET 264, as shown in Fig. 6. The circuit group 431 is connected to the accumulator battery 150 and the power generator 149.

The power generator 149 includes the magnetic track 131 (Fig. 4) and the coil substrate 120 (Fig. 5B). The power generator 149 generates electric power based on the relative rotation between the outer ring of the bearing part 250 and the inner ring of the bearing part 250, and feeds electricity to the sensor substrate 142 and other elements.

The power generator 149 generates a single-phase AC voltage and supplies it to the circuit group 431. The rectifier circuit 261 of the circuit group 431 is a full wave rectifier to rectify the single-phase AC voltage, which is received from the power generator 149, and converts it to the DC voltage. The DC voltage prepared by the rectifier circuit 261 is smoothed by the smoothing circuit 262, and becomes a stable DC voltage. Then, the DC voltage is stored in the accumulator battery 150 via the power management IC 263 (i.e., after the DC voltage is increased by the step-up DC-DC converter of the power management IC 263). The DC voltage stored in the accumulator battery 150 is decreased by the step-down DC-DC converter of the power management IC 263 and supplied to the angle sensor substrate 142 and the control substrate 143 when the measuring device 100 carries out the measurement.

The angle sensor 443 is mounted on the sensor substrate 170. The Z-phase detector 444 is mounted on the Z-phase detector substrate 171. The acceleration sensor 441, the temperature sensor 442, the microcomputer 451, the external memory 452, and the wireless communication module (transmitter) 453 are mounted on the control substrate 143. The microcomputer 451, the external memory 452 and the wireless communication module 453 are included in the control circuit 145 (see Fig. 5).

The acceleration sensor 441, the temperature sensor 442, and the angle sensor 443 use the DC voltage, which is supplied from the power source control substrate 141, to detect the acceleration, the temperature and the angular position, respectively.

For example, the angle sensor 443 is mounted on the sensor substrate 170 such that the angle sensor 443 is situated in the vicinity of the side face of the magnetic track 131. The rotating module 130, which has the magnetic track 131, is fixed to the inner ring of the bearing part 250. The angle sensor 443 detects the changing magnetic flux density, which is caused when the magnetic track 131 rotates with the inner ring of the bearing part 250, and obtains the angular position of the inner ring of the bearing part 250 relative to the outer ring of the bearing part 250 (angle between the inner ring and the outer ring of the bearing part 250) based on the detected magnetic flux. The angle sensor 443 is a magnetic angle sensor.

The angle sensor 443 may be an incremental type that indicates the increment of the angle, or an absolute type that indicates an absolute angle.

The microcomputer 451 includes a CPU 455, a DMA (Direct memory access) controller 456, and an internal memory 457. The microcomputer 451 writes the measurement values, which are obtained from the acceleration sensor 441 and the angle sensor 443, into the external memory 452. The DMA controller 456 may be referred to as a DMAC in the following description. Also, the internal memory 457 and the external memory 452 may collectively be referred to as a memory unit 230.

The CPU 455 initializes the memory unit 230, the acceleration sensor 441, the temperature sensor 442 and the angle sensor 443. The CPU 455 also performs an initial setting to the DMA controller 456. Upon receiving a DMA trigger (INT signal from the acceleration sensor 441), the DMA controller 456 starts the DMA data transfer. Specifically, as the DMA controller 456 receives the DMA trigger, the DMA controller 456 transfers the most recent measurement data (measured values) of the acceleration sensor 441 and the angle sensor 443 to the memory unit 230 (the external memory 452), without using the CPU 455 and without processing the measurement data (i.e., in the form or raw data).

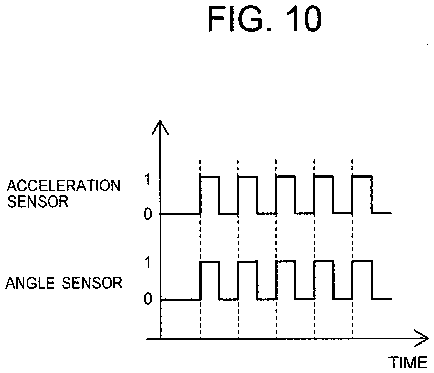

The acceleration sensor 441 and the angle sensor 443 update the measurement data at predetermined periods, respectively, and hold the measurement data. When the acceleration sensor 441 is the MEMS acceleration sensor, the updating period for the measurement data is an ODR (Output Data Rate) of the MEMS acceleration sensor. The acceleration sensor 441 generates an INT signal (interruption signal) every time the acceleration sensor 441 is ready to output the measurement data, and the INT signal is introduced to the DAM controller 456 as the trigger signal. The updating period (sampling period) will be described with reference to Fig. 10.

The wireless communication module 453 sends the data, which are stored in the external memory 452, to the gear failure determining device 10 under the control of the CPU 455. The wireless communication module 453 has the antenna 147. For example, the wireless communication module 453 sends the data to the gear failure determining device 10 by using a wireless communication technology such as BLE (Bluetooth® Low Energy). The data is received by the communication unit 15 of the gear failure determining device 10 and processed by the control unit 12 of the gear failure determining device 10.

If the BLE is used, the data is sent one packet by one packet, for example. If the throughput should be increased, the communication technology such as More Data or Data Length Extension may be used. Alternatively, PHY 2Mbps defined in the BLE 5.x may be used to increase the throughput.

When the first bearing 25 communicates with the gear failure determining device 10 by wireless communication, a wireless communication technology or standard other than BLE may be used. For example, Zigbee® or Thread may be used. Alternatively, a frequency band different from BLE may be used (e.g., a specific small electric power radio with a 920MHz band may be used).

Although the measurement data of the acceleration sensor 441 and the angle sensor 443 are written into the external memory 452 in the above-described embodiment, the measurement data of the acceleration sensor 441 and the angle sensor 443 may be written into the internal memory 457. Alternatively, both of the internal memory 457 and the external memory 452 may be used together. Alternatively, the external memory 452 and the internal memory 457 may be combined to a single memory.

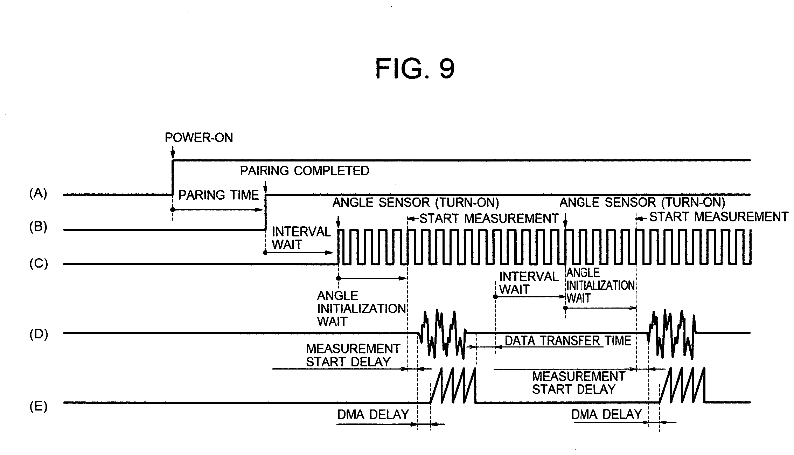

Fig. 9 is a set of timing charts useful to describe the operations and processing of the measuring device 100. Fig 9(A) shows the timing of starting the power supply (Power-ON) to the load L (the acceleration sensor 441, the angle sensor 443, and the circuit substrate group 140). "Power-ON" in Fig 9(A) indicates the timing when the power management IC 263 starts feeding the electricity to the load L, and this corresponds to the "Start Power Supply" at the time t1 in Fig. 7.

Fig. 9(B) shows the timing for the measuring device 100 to connect to the gear failure determining device 10 by wireless communication (BLE). "Pairing Time" in Fig. 9(B) is time that is necessary for the measuring device 100 to establish the communication with the gear failure determining device 10. The pairing time is, for example, 3.5-5 seconds. "Pairing completed" in Fig. 9(B) indicates the timing when the BLE connection is established.

Fig. 9(C) shows a pulse generated by the Z-phase detector 444. In this embodiment, the output of the Z-phase detector 444 is so-called "Active Low." The Z-phase detector 444 generates the Low signal when it detects the Z-phase magnet. "Interval Wait" is set to be equal to or larger than time necessary for the CPU 455 to finish a predetermined monitoring process. "Interval Wait" is, for example, thirty seconds. When the "Interval Wait" elapses, the angle sensor 443 is activated (Angle Sensor (Turn-On)). After the activation, the angle sensor 433 is initialized (Angle Initialization Wait). In the initialization, electricity is supplied to the angle sensor 433, and the angle sensor 433 becomes ready to operate. The "Angle Initialization Wait" or the initialization time of the angle sensor 433 is, for example, 100ms. After the initialization of the angle sensor 433, the CPU 443 starts the preparation for measurement (Start Measurement).

Fig. 9(D) shows the pulse (acceleration measurement value) generated by the acceleration sensor 441. The acceleration measurement value (pulse) is sent to the external memory 452 from the acceleration sensor 441, and stored in the external memory 452. The acceleration sensor 441 detects (measures) the acceleration of the first gear 22 during a predetermined measurement period, and holds the acceleration data. The predetermined measurement period is equal to or longer than time necessary for the first shaft 24a to rotate 360 degrees. The pulse generated by the acceleration sensor 441 (output of the acceleration sensor 441) represents vibrations generated by the first gear 22 as the first gear 22 meshes with the second gear 23. During the "Measurement Start Delay," the CPU 455 performs three processing (1)-(3). In the processing (1), the CPU 455 obtains the temperature data from the temperature sensor 442 before the measuring device 100 starts the measurement of the acceleration and the angle. The CPU 455 uses the temperature measured by the temperature sensor 442 to determine whether abnormal heat is generated in the first bearing 25. When the temperature measured by the temperature sensor 442 is equal to or higher than a predetermined value, the CPU 455 determines that an abnormal situation has occurred, and sends a signal, which indicates the abnormal heat generation or the abnormal situation, to the gear failure determining device 10. Upon receiving such signal, the gear failure determining device 10 displays a message, which indicates the abnormal heat generation, on the display 14 of the device 10. The CPU 455 also uses the temperature measured by the temperature sensor 442 to amend or correct the angle measured by the angle sensor 443. Because the angle sensor 443 is a magnetic sensor, the temperature may influence the magnetism, and such influence may cause the malfunctioning of the angle sensor 443 such that the angle data indicated by the angle sensor 443 may include a certain error. The possible measurement errors of the angle sensor 443 may be obtained by experiments in advance at various temperatures, and an amendment table may be prepared in advance to compensate for the measurement errors. Then, the CPU 455 uses the amendment table to amend the measured temperature. In the processing (2), the CPU 455 performs the programming to the DMA controller 456. Specifically, the CPU 455 performs the programming by allowing the DMA controller 456 to obtain the measurement data from the acceleration sensor 441 and the angle sensor 443 upon receiving the INT signal (i.e., the trigger signal) from the acceleration sensor 441, and store the measurement data into the external memory 452. In the processing (3), the CPU 455 activates (sets) the wake-up timer to count the time up to the predetermined measurement time. The "Measurement Start Delay" is approximately 480ms, for example. After the three processing of the "Measurement Start Delay" time, the CPU 455 enters a sleep state. The measurement of the acceleration and the angle is carried out by necessary minimum functional elements/blocks, including the DMA controller 456, the acceleration sensor 411, and the angle sensor 443, while the CPU 455 is in the sleep state. The measurement of the acceleration and the angle ends when the number of the measured data (acceleration data and the angle data) reaches a predetermined value or the time set to the wake-up timer (time-out time) is reached. When the measurement of the acceleration and the angle ends, the CPU 455 exits from the sleep state and wakes up. In this manner, the necessary minimum elements are only activated during the measurement of the acceleration and the angle. Thus, the measuring device 100 can operate with small electricity.

"Data Transfer Time" is time necessary for the measuring device 100 to transfer the data (pairs of measurement values of the acceleration sensor and the angle sensor) to the gear failure determining device 10 from the measuring device 100. "Data Transfer Time" is, for example, between two seconds and three seconds. The time from "Power-On" to the end of "Data Transfer Time" in Fig. 9(A) is the time for one operation of the measuring device 100.

Fig. 9(E) shows the pulse (angle measurement value) generated by the angle sensor 443. The angle measurement value (pulse) is sent to the external memory 452 from the angle sensor 443, and stored in the external memory 452. The angle sensor 443 detects (measures) the angular position of the first gear 22 during the predetermined measurement time. The pulse (waveform) of the angle sensor 443 delays from the pulse of the acceleration sensor 441 by "DMA Delay" and stored in the external memory 452. Theoretically, the measurement value of the acceleration sensor 441 and the measurement value of the angle sensor 443 are simultaneously sent to the external memory 452 by DMA (this is referred to as "sampling") by using the INT signal as a mutual trigger. In reality, however, there is a nanosecond-order difference between the sending of the measurement value of the acceleration sensor 441 and the sending of the measurement value of the angle sensor 443, and this difference is represented by "DMA Delay" in Fig. 9(E).

Fig. 10 shows the updating period (sampling period) of the measurement value of the acceleration sensor 441 and the measurement value of the angle sensor 443. In this embodiment, as shown in Fig. 10, the update timing (sampling timing) for the measurement value of the acceleration sensor 441 is synchronous with the update timing (sampling timing) for the measurement value of the angle sensor 443. In other words, the update timing of the acceleration sensor 441 coincides with the update timing of the angle sensor 443. The measurement value of the acceleration sensor 441 and the measurement value of the angle sensor 443 are stored in the external memory 452 in a synchronized manner (i.e., sharing the same time base or sharing at least one time base). For example, a first pair of the acceleration sensor's output and the angle sensor's output is sent to the external memory 452 from the acceleration sensor 441 and the angle sensor 443 by DMA. Thus, it is possible to obtain the measurement data (the acceleration data and the angle data) in the paired form (in the one-to-one relationship sharing the same time base). The time-synchronous angle and acceleration measurements are performed in this manner. It should be noted that the sampling frequency of the acceleration sensor 441 (ODR) is selected, for example, between 1Hz and 5376Hz in advance.

Upon finishing one operation, the measuring device 100 starts a next operation (second operation). Specifically, the measuring device 100 waits for the elapse of the "Interval Wait," initializes the angle sensor 443 and starts the measurement. During the "Interval Wait," the power management IC 263 feeds the electricity to the sensors. Upon sending the measurement data to the gear failure determining device 10, the second operation of the measuring device 100 is complete.

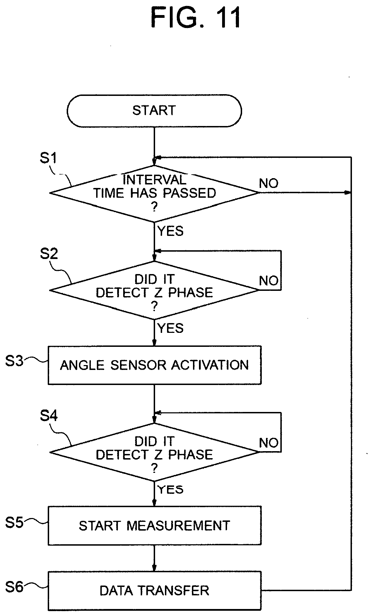

Fig. 11 shows a flowchart to describe the behavior of the measuring device 100 and the processing carried out by the measuring device 100. It should be assumed that the electricity is already fed to the measuring device 100 (i.e., "Power-On" in Fig. 9(A) is carried out), and the BLE communication is already established between the measuring device 100 and the gear failure determining device 10 (i.e., "Pairing Completed" in Fig. 9(B)). In Fig. 11, "S" stands for step.

In S1, the measuring device 100 determines whether the "Interval Wait" (Fig. 9(C)) has passed or not. The "Interval Wait" is, for example, thirty seconds. If the determination result of S1 is Yes, the processing goes to S2. If the determination result of S1 is No, S1 is repeated.

In S2, the measuring device 100 determines whether the Z-phase detector 444 has detected the Z-phase magnet 162 (Fig. 9(C)). If the determination result of S2 is Yes, the processing goes to S3. If the determination result of S2 is No, S2 is repeated.

In S3, the measuring device 100 activates the angle sensor 443 (performs the initialization). This is performed in the "Angle Initialization Wait" in Fig. 9(C). The "Angle Initialization Wait" is, for example, 100ms. When the "Angle Initialization Wait" has passed, the processing proceeds to S4.

In S4, the measuring device 100 determines whether the Z-phase detector 444 has detected the Z-phase magnet 162 again after S3. If the determination result of S4 is Yes, the processing proceeds to S5. Specifically, if the Z-phase detector 444 detected the Z-phase magnet 162 after the initialization of the angle sensor 443, the processing goes to S5. If the determination result of S4 is No, S4 is repeated.

In S5, the acceleration sensor 441 and the angle sensor 443 start the measurement, and the measurement data of the acceleration sensor 441 (Fig. 9(D)) and the measurement data of the angle sensor 443 (Fig. 9(E)) are synchronously stored in the external memory 452 by DMA.

In S6, the measuring device 100 transfers the measurement data of the acceleration sensor 441 and the angle sensor 443 to the gear failure determining device 10 through the BLE communication. After the data transfer, the processing returns to S1.

As described above, the single operation of the measuring device 100 is performed by the processing from S1 to S6.

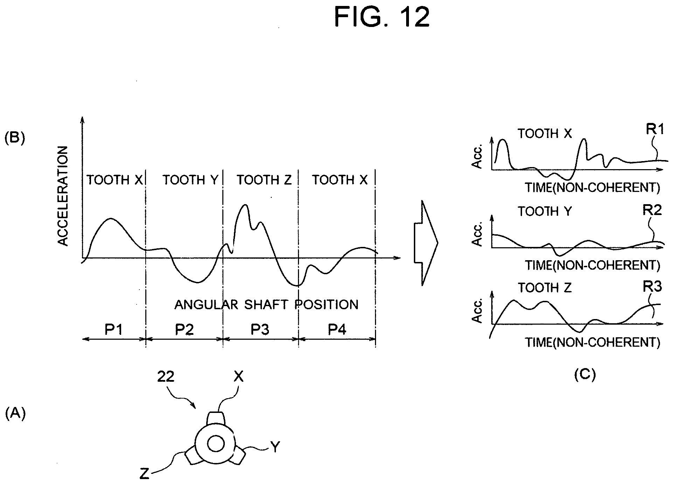

Now, a general principle of the gear failure detection of this embodiment will be described. Specifically, the processing of the gear failure determining device 10 that receives the measurement data of the acceleration sensor 441 and the angle sensor 443 from the measuring device 100 will be described. Referring first to Fig. 12, described is how to obtain an acceleration curve for each of the teeth of the first gear. For the sake of description, the first gear 22 is assumed to have three teeth X, Y and Z, as shown in Fig. 12(A). The second gear 23 that meshes with the first gear 22 is assumed to have four or more teeth.

Fig. 12(B) shows an acceleration curve when the first gear 22 has the three teeth X, Y and Z. The vertical axis indicates the measurement value of the acceleration sensor 441 (Fig. 9(D)), and the horizontal axis indicates the measurement value of the angle sensor 443 (Fig. 9(E)). As the first gear 22 meshes with the second gear 23 and the first gear 22 rotates 360 degrees, the tooth X of the first gear 22 contacts a corresponding tooth of the second gear, the tooth Y of the first gear 22 contacts a next tooth of the second gear, and then the tooth Z of the first gear 22 contacts a subsequent tooth of the second gear. Thus, as shown in Fig. 12(B), the measurement data of the acceleration sensor 441 is obtained in series for the vibration of the tooth X, the vibration of the tooth Y and the vibration of the tooth Z. As the first gear 22 rotates another 360 degrees, the tooth X contacts a fourth teeth of the second gear.

After obtaining the acceleration curve shown in Fig. 12(B), i.e., the waveform generated by the acceleration sensor 441, the gear failure determining device 10 collects (extracts and combines) the curve segments for the tooth X to make a per-tooth curve R1 for the tooth X, collects the curve segments for the tooth Y to make a per-tooth curve R2 for the tooth Y, and collects the curve segments for the tooth Z to make a per-tooth curve R3 for the tooth Z, as shown in Fig. 12(C). The per-tooth curve R1 of Fig. 12(C) is formed by connecting in series the curve segments of the angular sections P1, P4, P7 (not shown) and P10 (not shown) of Fig. 12(B). How many curve segments are connected in series to make the per-tooth curve R1 depends upon an amount of the measurement data received from the measuring device 100.

Similarly, the per-tooth curve R2 is formed by connecting in series the curve segments of the angular sections P2, P5 (not shown), P8 (not shown) and P11 (not shown) of Fig. 12(B).

Similarly, the per-tooth curve R3 is formed by connecting in series the curve segments of the angular sections P3, P6 (not shown), P9 (not shown) and P12 (not shown) of Fig. 12(B).

In this manner, it is possible to obtain the three acceleration-angle curves R1, R2 and R3 for the three teeth X, Y and Z, respectively, in this embodiment.

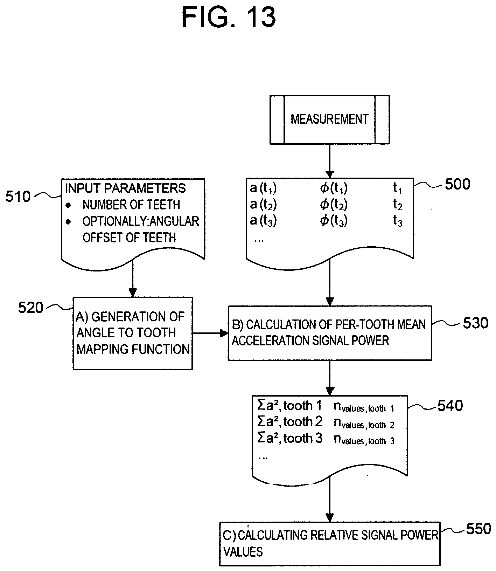

Now, the defect detection (failure detection) carried out by the gear failure determining device 10 will be described with reference to Fig. 13. It is assumed here that the first gear 22 has twenty-two teeth in order to consider a gear in a real world. The gear failure detection uses a Per-Tooth method to find gear failure on a tooth-by-tooth basis in this embodiment. The Per-Tooth method uses tooth-specific vibration energy derived from the acceleration data (will be described).

The gear failure determining device 10 receives the measurement values a(t) of the acceleration sensor 441 and

the measurement values $\varphi(t)$ of the angle sensor 443 in the form of time-synchronous angle-acceleration pairs from the measuring device 100, and stores the measurement values a(t) and $\varphi(t)$ in the storage unit 13 together with the time t (500 in Fig. 13).

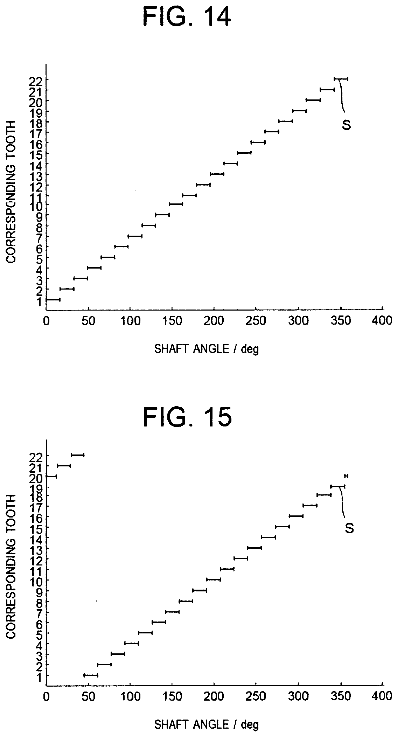

A user of the gear failure determining device 10 enters a number of the teeth of the first gear 22 by using the input unit 11 (510 in Fig. 13). It should be noted that the user may also enter an angle offset value of the first gear 22 although this is not mandatory. The angle offset value of the first gear 22 indicates at which absolute angular position a particular tooth of the first gear 22 is present, and can be used as a calibration value to know which tooth is exactly damaged. The angle offset value will be described with reference to Fig. 14 and Fig. 15.

The gear failure determining device 10 prepares an angle-tooth map (520 in Fig. 13). Fig. 14 shows an example of the angle-tooth map, and Fig. 15 shows another example of the angle-tooth map. In Fig. 14, the vertical axis of the map indicates the twenty-two teeth of the first gear 22, and the horizontal axis indicates the angle of the first shaft 24a. The horizontal axis indicates a relative value of the shaft angle. Fig. 14 shows a map prepared without an angle offset value. When the angle offset value is not used, any tooth that is present at the top position of the first shaft 24a in the map preparation process is considered as the #1 tooth. Thus, an unknown tooth is referred to as the #1 tooth in the example of Fig. 14.

In Fig. 15, the vertical axis of the map indicates the twenty-two teeth of the first gear 22, and the horizontal axis indicates the absolute angle of the first shaft 24a. Fig. 15 shows the map prepared with the angle offset value. In the map preparation process, all the teeth of the first gear 22 is numbered as #1 to #22 beforehand by, for example, indicia. In the example of Fig. 15, the tooth present at the 0-degree position of the first shaft 24a in the map preparation process is #20 tooth. Thus, the #1 tooth starts meshing with teeth of the second gear 23 at the angle of 44.6 degrees (absolute angle). In the case of Fig. 15, therefore, the user enters the angle offset value of 44.6 degrees into the gear failure determining device 10 (510 in Fig. 13).

The map in each of Figs. 14 and 15 has twenty-two line segments S. Because one rotation of the gear (or the shaft) is 360 degrees and the first gear 22 has twenty-two teeth, each line segment S represents approximately 16.36 degrees (360 divided by 22 is approximately 16.36). In each of Figs. 14 and 15, one tooth is specified as the shaft angle is specified. Thus, each of Figs. 14 and 15 shows the mapping function. Therefore, the processing 520 generates the mapping function. The gear failure determining device 10 may use the map shown in Fig. 14 or the map shown in Fig. 15. If the gear failure detennining device 10 uses the map shown in Fig. 14, the gear failure determining device 10 does not know which tooth of the first gear 22 is the #1 tooth of the map shown in Fig. 14. However, the gear failure determining device 10 can determine whether the gear has a damaged tooth (e.g., the #1 tooth). If the gear failure determining device 10 uses the map shown in Fig. 15, the gear failure determining device 10 can know which tooth of the first gear 22 is the #1 tooth of the map shown in Fig. 15, and can also determine whether the #1 tooth is damaged or not. In the following description, the gear failure determining device 10 uses the map shown in Fig. 15.

After generating the angle-tooth map of Fig. 15 (angle-tooth mapping function), the gear failure determining device 10 calculates a per-tooth mean acceleration signal power (530 in Fig. 13). The mean acceleration signal power will simply be referred to as acceleration signal power. The information to be used in the calculation of the acceleration signal power includes the measurement data received from the measuring device 100 and the map shown in Fig. 15. As indicated by 500, the measurement data received from the measuring device 100 is the time-synchronous angle and acceleration measurements, i.e., the measured acceleration a(t), the angle position information $\varphi(t)$ and the time t. The acceleration signal power of the #k tooth of the first gear 22 is calculated with the equation (1) below.

$$P_{(tooth=k)} = \frac{1}{n_{samples,k}} \sum_{i=0}^{n_{samples}} s(i)^2 \tag{1}$$

$$s(\varphi(i)) = 0 \text{ for } tooth(\varphi(i)) \neq k$$

$$s(\varphi(i)) = a(i) \text{ for } tooth(\varphi(i)) = k \tag{*}$$

In the equation (1), P represents the acceleration signal power, and s(i) represents the measured acceleration. Tooth $(\varphi(i))$ indicates the tooth number in the mapping function at the angle position corresponding to the sampling number i. If the tooth number is not **k**, tooth $(\varphi(i))$ is not equal to **k**, and therefore s$(\varphi(i))$ becomes zero. If the tooth number is **k**, tooth $(\varphi(i))$ is equal to **k**, and therefore s$(\varphi(i))$ becomes the measured acceleration a(i). $n_{samples \cdot k}$ indicates the number of sampled teeth that meet the condition (*).

The equation (1) calculates the sum of acceleration (sampled value) squared, and divided by the sampling number for each tooth (the #k tooth). Thus, the equation (1) provides the acceleration signal power for the #k tooth. This calculation is performed for all the teeth of the first gear 22. Therefore, the equation (1) provides a list of twenty-two acceleration signal powers P. In other words, the processing 530 gives the twenty-two acceleration signal powers for the twenty-two teeth, respectively.

Reference numeral 540 in Fig. 13 shows the values used in the equation (1) for the respective teeth.

Upon finishing the calculation of the equation (1), the gear failure determining device 10 carries out the processing 550 in Fig. 13 to obtain relative power coefficients (relative signal power values). The relative signal power values can be used as damage indicators that indicate a degree of damage to the respective teeth. When two gears mesh each other, vibrations occur even if the teeth of the gears have no damages. In order to easily distinguish the vibrations transmitted from damaged teeth from the vibrations transmitted from undamaged teeth, the processing 550 is performed in this embodiment. Specifically, the processing 550 utilizes the equation (2) and the equation (3).

Firstly, the equation (2) is used to calculate the mean value of all per-tooth signal power values.

$$\overline{P} = \frac{1}{Z}\sum_{k=1}^{Z} P(k) \tag{2}$$

Subsequently, the equation (3) is used to calculate a relative power coefficient for each tooth.

$$P_{rel}(k) = \frac{P(k)}{\overline{P}} - 1 \tag{3}$$

Characteristic values of the relative signal power coefficients $P_{rel}(k)$ are:

If a #k tooth shows exactly the average acceleration signal power, $P_{rel}(k)=0$.
If a #k tooth induces lower than the average acceleration signal power, $P_{rcl}(k)=0$.
If a #k tooth induces twice the average acceleration signal power, $P_{rel}(k)=1$.
If a #k tooth induces three times the average acceleration signal power, $P_{rel}(k)=2$ and so on.
It should be noted that if a #k tooth induces lower than the average acceleration signal power, $P_{rel}(k)$ can be smaller than zero ($P_{rel}(k)<0$) rather than $P_{rel}(k)=0$.

By normalizing the average vibration baseline to a value of zero, the value of $P_{rcl}(k)$ allows for simple normality (damaged or nondamaged) assessment of each tooth. The assessment may be made by manual and/or automated evaluation. In the automated evaluation, a threshold value may be set, and the gear failure determining device 10 may provide the "damaged" assessment when the value of $P_{rel}(k)$ is equal to or greater than the threshold value.

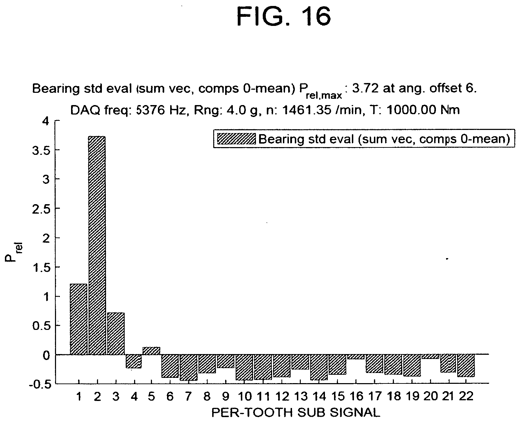

Fig. 16 shows the result of experiment, which was carried out by the inventors, to confirm the feasibility of the above-described embodiment, as a proof of concept. The first gear 22 was a helical gear, and the number of teeth is twenty-two. Prior to the experiment, it was confirmed that the second gear 23 that meshed with the first gear 22 had no damaged teeth. The vertical axis of the graph shown in Fig. 16 indicates the relative signal power coefficient $P_{rel}(k)$, and the horizontal axis indicates the tooth #. The title of Fig. 16 contains the following information: The data was evaluated according to the algorithm described in the paragraphs [0109] to [0130] of this specification ("Bearing std eval"). It was evaluated from the 3D sum vector (components made zero-mean before calculation of vector sum) of the triaxial acceleration data acquired by the measuring device 100 ("sum vec, comps 0-mean"). A maximum $P_{rel}$ of 3.72 was reached, at an angular window shift position of 6/10 the angular span of one tooth. This position was identified by doing the per-tooth evaluation for all 10 shift positions and then picking the one that yields the maximum $P_{rel}$ value. The sampling frequency of both acceleration and angular data was set to 5376 Hz, with an acceleration range of +/- 4g. The speed of the shaft during this test was 1461.35 /min, with a nominal pinion torque of 1000 Nm. If the threshold $P_{rel}(k)$ is set to two, the gear failure determining device 10 determines that the #2 tooth (k=2) is damaged. In this manner, this embodiment allows for per-tooth evaluation of acceleration signal power as indicator for individual teeth's condition. This evaluation is done by sampling both acceleration and angle data periodically and simultaneously.

As described above, the measuring device 100 of this embodiment (the acceleration sensor 441, the angle sensor 443, the circuit substrate group 140 and other components) is housed in the first gear 25. In addition, the electricity consumed by the measuring device 100 is generated as the first bearing 25 rotates, i.e., the measuring device 100 generates the electricity and feeds it to the measuring device 100). Accordingly, the measuring device 10 can have a small size, and in turn the gear failure detecting system 30 can have a small size as a whole. Further, the power saving of the gear failure detecting system 30 is achieved.

As described above, the gear failure detecting system 30 includes the measuring device 100 that has a self-power generation mechanism and a wireless communication function, and utilizes a very small amount of electricity generated by the self-power generation mechanism to obtain and send the acceleration data and the associated angle data of the teeth of the first gear 22 to the gear failure determining device 10 by wireless communication.

The measuring device 100 obtains the measurement data (the acceleration data of the first gear 22 that is time-synchronous with the angle data of the first gear 22). Then, the external memory 452 stores the measurement data (the acceleration data and the angle data on the one-to-one basis). Because the acceleration data is associated with the angle data on the one-to-one basis, it is possible to appropriately determine what vibrations are occurring on which teeth (or at which angle) while the first gear 22 is rotating, and accurately specify the location of the failure (the damaged tooth).

In this embodiment, the acceleration data and the angle data are obtained in the paired form (one by one), and the absolute angle data is available at the same sampling rate as the acceleration data. Thus, it is possible to ignore irregularities in the rotating speed of the first gear 22.

The acceleration sensor 441, the temperature sensor 442 and the angle sensor 443 are electrically coupled to the microcomputer 451 so that the measuring device 100 can have a small size. Thus, it is possible to house the measuring device 100 in the cover 110 even if the cover 110 is small.

The measurement data obtained from the acceleration sensor 441 and the angle sensor 443 are stored in the external memory 452 without any processing, i.e., the raw data of the measurements are stored in the external memory 452. Thus, the measuring device 100 does not have perform data processing (e.g., converting a hexadecimal number to a decimal number) at the time of data storage. Accordingly, high-speed data storage is possible. Because such data processing is unnecessary, any load associated with such data processing would not be exerted on the measuring device 100. Therefore, it is possible to keep the electricity consumption of the measuring device 100 to a low level.

Because the measuring device 100 stores the measurement data in the external memory 452 by DMA or the DMA controller 456, loads exerted on the CPU 455 will be reduced as compared to a case where the data storage into the external memory 452 should be performed by the CPU 455.

Therefore, the measuring device 100 of this embodiment can use an inexpensive MEMS sensor as the acceleration sensor. Also, the microcomputer 451 can be a low power consumption device.

The gear failure detecting system 30 of this embodiment uses the rolling bearing 25 (i.e., self-powered, sensor-equipped bearing device) to monitor the conditions of the gearbox 20 and evaluate the signals for the respective teeth of the first gear 22.

The measuring device 100 has the acceleration sensor 441 located in the vicinity of the point of vibration excitation (point of the gear mesh). In other words, the physical proximity of the point of vibration picking-up to the point of vibration excitation is realized by the measuring device 100. Thus, it is possible to obtain a signal having a high S/N ratio, as compared to the arrangement in which the vibration sensor is attached to the outer surface of the housing 21 of the gearbox 20. Accordingly, it is possible to make a reliable gear evaluation even if an inexpensive acceleration sensor, such as MEMS acceleration sensor, is used.

The Per-Tooth method used in the algorithms for the gear failure determination (evaluation) in this embodiment has the following advantages.

It is possible to specify a damaged tooth among a plurality of teeth. The gear defect evaluation can be carried out with low computing cost. It is possible to prepare an evaluation result from the measurement data, and determine the gear defect or abnormality from the evaluation result, without comparing the measurement data to vibration data (acceleration data) of a normal gear. Before this invention has been made, the established theory requires the comparison of the measurement data to the vibration data of a normal gear when the gear failure diagnosis is carried out.

The gear defect evaluation can be carried out with low computing cost because the determining device 10 provides the evaluation result (or the failure diagnosis) with four arithmetic operations. The determining device 10 does not require high computing cost, such as FFT (Fast Fourier Transform). The processing shown in Fig. 13 also requires low computing power as compared to conventional time-frequency-domain methods, because the processing of Fig. 13 requires only few mathematical operations.

Because the acceleration sensor 441 is not attached to the outer surface of the housing 21 of gearbox 20, the gear failure detecting system 30 can be employed regardless of the shape of the housing 21, and the shape of the housing 21 does not influence the accuracy of the gear defect diagnosis.

It is possible to specify a damaged tooth among a plurality of teeth without knowing a behavior of the gear in a normal condition.

If the acceleration sensor is attached to the outer surface of the housing 21 of the gearbox 20, the housing 21 exists between the point of the gear mesh and the acceleration sensor, and therefore an expensive and high-performance sensor is required to eliminate (compensate for) the adverse influence of the vibration transfer path. In this embodiment, on the other hand, the acceleration sensor 441 is included in the first bearing 25, the acceleration sensor 441 can measure the vibrations of the first gear 22 in the vicinity of the first gear 22. Thus, the acceleration sensor 441 is not influenced by the vibration transfer path very much, and does not have to be an expensive and high-performance sensor. In other words, the acceleration sensor 441 can be an inexpensive sensor. Even if the inexpensive acceleration sensor is used, the acceleration senor can accurately detect the vibration of the first gear 22 and the gear failure determining device 10 can provide an accurate diagnosis result.

When the acceleration sensor 441 included in the first bearing 25 is the MEMS acceleration sensor, the measuring device 100 (or the gear failure system 30) has advantages in terms of cost and sensor position.

The acceleration sensor 441 is attached to the cover 110, and the cover 110 is attached to the outer ring of the first bearing 25. The outer ring of the first bearing 25 is the nearest non-rotating machine element to the point of gear mesh. Thus, the vibration detected by the acceleration sensor 441 is, in effect, the vibration generated by the gear mesh. Because the acceleration sensor 441 is located near the point of vibration excitation, the measurement data of the acceleration sensor 441 is not influenced by the vibration transfer path such as the housing 21.

As shown in Fig. 15, the angle-tooth map with the angle offset value is used in this embodiment. When the angle offset value is used, the per-tooth signal power split points are less arbitrary. Thus, the vibration power induced by the damaged tooth can be resolved more precisely to one tooth sub signal, as compared to the case where the map of Fig. 14 is used. In other words, when the three per-tooth curves R1, R2 and R3 of Fig. 12(C) are created from the single curve of Fig. 12(B), the divisions P1, P2, P3, P4, ... are made precisely.

It should be noted that although the gear failure determining device 10 is a personal computer in the above-described embodiment, the gear failure determining device 10 may be a tablet computer, a smartphone (cellular phone) or a wearable watch.

In the above-described embodiment, the measuring device 100 sends the measurement values to the gear failure determining device 10 without any processing. It should be noted, however, that part of the processing executed by the gear failure determining device 10 may be executed by the measuring device 100. In other words, the measuring device 100 may have part of the functions of the gear failure determining device 10. For example, the processing shown in Fig. 13 may be executed by the microcomputer 451. The processing shown in Fig. 13 only involves a small amount of calculation, and therefore an amount of electric power to be consumed by such processing is small. Therefore, an electric power generated by the first bearing 25 is enough for the microcomputer 451 to operate. This modification may be referred to as "on-bearing data processing." This massively reduces the amount of data to be transferred from the measuring device 100 to the gear failure determining device 10, as thousands of angle and accelerations samples per measurement are condensed into one scalar value per tooth this way.

The measurement time may be changed depending upon a capacity of the memory unit 230 and an amount of electric power to be consumed. The temperature sensor 442 may be dispensed with.

In Fig. 6, a protection circuit may be provided between the smoothing circuit 262 and the power management IC 263. In Fig. 6, the power generation, which is based on the electromagnetic induction, takes place as the magnet M rotates relative to the coil C. Thus, an electromotive force increases in proportion to the increasing rotation speed of the magnet M. If any mechanical element or device, which is connected to the first shaft 24a, breaks down, and the first shaft 24a rotates at an extremely high speed, the electromotive force of the magnet M and the coil C increases correspondingly. As a result, a voltage that is high beyond expectations is introduced to the power management IC 263 and may damage the measuring device 100. In order to avoid such damage of the measuring device 100, the protection circuit may be provided between the smoothing circuit 262 and the power management IC 263. This protection circuit is an input-protection circuit, and may be selected from various kinds of circuits. For example, a Zener diode may be used as the protection circuit, and disposed between the smoothing circuit 262 and the power management IC 263. The Zener diode converts the input voltage to heat when the input voltage is higher than a predetermined value. By converting the voltage to heat, the Zener diode consumes the excessive voltage and protects the measuring device 100.

In the above-described embodiment, the sampling timing of the acceleration sensor 441 coincides with the sampling timing of the angle sensor 443, as shown in Fig. 10. For example, if the acceleration sensor 441 carries out the measurement ten times, the angle sensor 443 also carries out the measurement ten times. Then, the ten measurement values of the acceleration sensor 441 and the ten measurement values of the angle sensor 443 can make ten pairs of the measurement values. It should be noted, however, that the embodiment is not limited to such way of obtaining pairs of the measurement values. Specifically, the sampling timing of the acceleration sensor 441 may be different from the sampling timing of the angle sensor 443. For example, the sampling timing of the acceleration sensor 441 may be twice the sampling timing of the angle sensor 443. In such case, when the acceleration sensor 441 carries out the measurement ten times, the angle sensor 443 carries out the measurement five times. Then, when the measurement value of the acceleration sensor 441 and the measurement value of the angle sensor 443 make a measurement value pair and are transferred into the memory 452 by means of DMA, the DMA controller transfers the measurement value pair to the memory 452 such that the measurement timing of the acceleration sensor 441 coincides with the measurement timing of the angle sensor 443. This way of obtaining the measurement value pair is not the sampling timing synchronization. Rather, this is coupling (linking) of two measurement values by using the time information of the measurement value of the acceleration sensor 441 and the time information of the measurement value of the angle sensor 443. More specifically, this is linking of the two measurement values, sharing one or particular common time base (common time information). In the present invention, therefore, it is satisfactory as long as the measurement value of the acceleration sensor 441 and the measurement value of the angle sensor 443 make a pair by a suitable type of linking.

REFERENCE NUMERALS AND SYMBOLS

10: Gear failure determining device
20: Gearbox
21: Housing
22: First gear
25: First bearing
30: Gear failure detecting system
100: Measuring device
110: Cover
120: Coil substrate
123: Coil pattern
141: Power source control substrate
142: Angle sensor substrate
143: Control substrate
149: Power generator
160: Z-phase magnet unit
230: Memory unit
250: Bearing part
261: Rectifier circuit
262: Smoothing circuit
236: Power management IC
441: Acceleration sensor
442: Temperature sensor
443: Angle sensor
444: Z-phase detector
452: External memory
455: CPU
456: DMA controller

**Claims**

1.  A measuring device (100) attachable to one side face of a bearing part, the bearing part being adapted to support a shaft (24a) having a gear (22) thereon such that the shaft can rotate, the measuring device comprising:

    a cover (110) attached to an outer ring of the bearing part to cover the side face of the bearing part;
    an acceleration sensor (441) provided on an inner face of the cover to measure vibrations of the bearing part;
    an angle sensor (443) provided on the inner face of the cover to measure an angle between the outer ring of the bearing part and an inner ring of the bearing part; and
    a data collecting unit (456) provided on the inner face of the cover,
    **characterized in that**
    the data collecting unit (456) is configured to obtain the acceleration measured by the acceleration sensor and the angle measured by the angle sensor in a linked manner, sharing one common time base, in the form of time-synchronous angle-acceleration pairs.

2.  The measuring device according to claim 1, wherein the acceleration sensor detects vibrations transmitted to the bearing part from teeth of the gear to measure the acceleration of the gear, and the angle sensor measures a rotation angle of an inner ring of the bearing part relative to the outer ring of the bearing part.

3.  The measuring device according to claim 1 or 2, wherein the data collecting unit includes:

    a control unit (456) for relocating the measured acceleration and the measured angle from the acceleration sensor and the angle sensor by means of DMA (Direct Memory Access); and
    a memory (452) for receiving the measured acceleration and the measured angle from the acceleration sensor and the angle sensor, respectively, and storing the measured acceleration and the measured angle in the form of time-synchronous angle-acceleration pairs.

4. The measuring device according to any one of claims 1 to 3, wherein the measuring device (100) further includes a pulse generator (444) for generating one pulse as an inner ring of the bearing part rotates 360 degrees, and the data collecting unit (456) obtains the acceleration measured by the acceleration sensor and the angle measured by the angle sensor in the linked manner based on the pulse generated by the pulse generator.

5. The measuring device according to any one of claims 1 to 4 further including a power generating unit (149) for generating electricity based on relative rotations between the outer ring and an inner ring of the bearing part to feed the electricity to the acceleration sensor, the angle sensor and the data collecting unit.

6. The measuring device according to any one of claims 1 to 5 further including a communication unit (453) for sending the measured acceleration and the measured angle to a failure determining unit (10) from the data collecting unit (452).

7. The measuring device according to claim 6, wherein the communication unit (453) utilizes Bluetooth® Low Energy, ZigBee® or Thread to send the measured acceleration and the measured angle to the failure determining unit (10) from the data collecting unit (452).

8. A gear failure detecting system (30) comprising the measuring device according to any one of claims 1 to 7 and a gear failure determining device (10) for determining failure of a gear (22) based on measured acceleration and measured angle received from the measuring device, the gear failure determining device (10) comprising:

an input unit (11) for entering a number of teeth of the gear;
a map generating unit (12) for generating a map that defines relationship between the teeth of the gear and a rotation angle of a shaft (24a) on which the gear is mounted;
a first calculation unit (12) for calculating an acceleration signal power using an equation (1);
a second calculation unit (12) for calculating a mean acceleration signal power using an equation (2); and
a third calculation unit (12) for calculating a damage indicator of the teeth using an equation (3).

$$P_{(tooth=k)} = \frac{1}{n_{samples,k}} \sum_{i=0}^{n_{samples}} s(i)^2$$

$$(1)$$

where $P_{(tooth=k)}$ is an acceleration signal power of a k-th tooth of the gear, $s(i)$ is the measured acceleration of the k-th tooth, and $n_{samples,\,k}$ is a number of the measured acceleration of the k-th tooth.

$$\overline{P} = \frac{1}{Z} \sum_{k=1}^{Z} P(k)$$

$$(2)$$

where $\overline{P}$ is a mean acceleration signal power of the k-th tooth, $P(k)$ is the acceleration signal power of the k-th tooth, and Z is a number of the acceleration signal power.

$$P_{rel}(k) = \frac{P(k)}{\overline{P}} - 1$$

$$(3)$$

where $P_{rel}(k)$ is a damage indicator of the k-th tooth.

9. The gear failure detecting system (30) according to claim 8, the failure determining device (10) further including a determination unit (12) for determining whether the k-th tooth is damaged or not, based on the damage indicator.

**Patentansprüche**

1. Messvorrichtung (100), die an einer Seitenfläche eines Lagerteils anbringbar ist, wobei das Lagerteil eingerichtet ist, um eine Welle (24a) mit einem darauf befindlichen Zahnrad (22) zu lagern, so dass sich die Welle drehen kann, wobei die Messvorrichtung aufweist:

   eine Abdeckung (110), die an einem äußeren Ring des Lagerteils angebracht ist, um die Seitenfläche des Lagerteils abzudecken;
   einen Beschleunigungssensor (441), der an einer Innenfläche der Abdeckung bereitgestellt ist, um Vibrationen des Lagerteils zu messen;
   einen Winkelsensor (443), der an der Innenfläche der Abdeckung bereitgestellt ist, um einen Winkel zwischen dem äußeren Ring des Lagerteils und einem inneren Ring des Lagerteils zu messen; und
   eine Datensammeleinheit (456), die auf der Innenfläche der Abdeckung bereitgestellt ist,
   **dadurch gekennzeichnet, dass**
   die Datensammeleinheit (456) konfiguriert ist, um die durch den Beschleunigungssensor gemessene Beschleunigung und den durch den Winkelsensor gemessenen Winkel in verknüpfter Weise unter Verwendung einer gemeinsamen Zeitbasis in Form von zeitsynchronen Winkel-Beschleunigungs-Paaren zu erhalten.

2. Messvorrichtung gemäß Anspruch 1, wobei der Beschleunigungssensor Vibrationen erfasst, die von Zähnen des Zahnrads auf das Lagerteil übertragen werden, um die Beschleunigung des Zahnrads zu messen, und der Winkelsensor einen Drehwinkel eines Innenrings des Lagerteils relativ zum Außenring des Lagerteils misst.

3. Messvorrichtung gemäß Anspruch 1 oder 2, wobei die Datensammeleinheit umfasst:

   eine Steuerungseinheit (456) zum Wiederauffinden der gemessenen Beschleunigung und des gemessenen Winkels von dem Beschleunigungssensor und dem Winkelsensor mittels DMA (direktem Speicherzugriff); und
   einen Speicher (452) zum Empfangen der gemessenen Beschleunigung und des gemessenen Winkels von dem Beschleunigungssensor bzw. dem Winkelsensor und zum Speichern der gemessenen Beschleunigung und des gemessenen Winkels in der Form von zeitsynchronen Winkel-Beschleunigungs-Paaren.

4. Messvorrichtung gemäß einem der Ansprüche 1 bis 3, wobei die Messvorrichtung (100) weiterhin einen Impulsgenerator (444) zum Erzeugen eines Impulses umfasst, wenn sich ein innerer Ring des Lagerteils um 360 Grad dreht, umfasst, und
   die Datensammeleinheit (456) die durch den Beschleunigungssensor gemessene Beschleunigung und den durch den Winkelsensor gemessenen Winkel auf verknüpfte Weise auf der Grundlage des durch den Impulsgenerator erzeugten Impulses erhält.

5. Messvorrichtung gemäß einem der Ansprüche 1 bis 4, weiterhin mit einer Energieerzeugungseinheit (149) zum Erzeugen von Elektrizität auf der Grundlage relativer Drehungen zwischen dem äußeren Ring und einem inneren Ring des Lagerteils, um den Beschleunigungssensor, den Winkelsensor und die Datensammeleinheit mit Elektrizität zu versorgen.

6. Messvorrichtung gemäß einem der Ansprüche 1 bis 5, weiterhin mit einer Kommunikationseinheit (453) zum Senden der gemessenen Beschleunigung und des gemessenen Winkels von der Datensammeleinheit (452) an eine Ausfallbestimmungseinheit (10).

7. Messvorrichtung gemäß Anspruch 6, wobei die Kommunikationseinheit (453) Bluetooth® Low Energy, ZigBee® oder Thread verwendet, um die gemessene Beschleunigung und den gemessenen Winkel von der Datensammeleinheit (452) an die Ausfallbestimmungseinheit (10) zu senden.

8. Zahnradausfallbestimmungssystem (30), mit der Messvorrichtung gemäß einem der Ansprüche 1 bis 7 und einer Zahnradausfallbestimmungsvorrichtung (10), um einen Ausfall eines Zahnrades (22) auf der Grundlage einer gemessenen Beschleunigung und eines gemessenen Winkels zu bestimmen, die von der Messvorrichtung empfangen werden, wobei die Zahnradausfallbestimmungsvorrichtung (10) aufweist:

   eine Eingabeeinheit (11) zum Eingeben einer Anzahl von Zähnen des Zahnrades;
   eine Kennfelderzeugungseinheit (12) zum Erzeugen eines Kennfeldes, das eine Beziehung zwischen den Zähnen des Zahnrads und einem Drehwinkel einer Welle (24a) definiert, auf der das Zahnrad montiert ist;

eine erste Berechnungseinheit (12) zum Berechnen einer Beschleunigungssignalleistung unter Verwendung einer Gleichung (1);
eine zweite Berechnungseinheit (12) zum Berechnen einer gemittelten Beschleunigungssignalleistung unter Verwendung einer Gleichung (2); und
eine dritte Berechnungseinheit (12) zum Berechnen eines Schadensindikators der Zähne unter Verwendung einer Gleichung (3),

$$P_{(tooth=k)} = \frac{1}{n_{samples,k}} \sum_{i=0}^{n_{samples}} s(i)^2 \qquad (1)$$

wobei $P_{(tooth=k)}$ eine Beschleunigungssignalleistung eines k-ten Zahns des Zahnrads ist, s(i) die gemessene Beschleunigung des k-ten Zahns ist, und $n_{Abtastungen,k}$ eine Anzahl von der gemessenen Beschleunigung des k-ten Zahns ist,

$$\overline{P} = \frac{1}{Z} \sum_{k=1}^{Z} P(k) \qquad (2)$$

wobei $\overline{P}$ eine mittlere Beschleunigungssignalleistung des k-ten Zahns ist, P(k) die Beschleunigungssignalleistung des k-ten Zahns ist, und Z eine Anzahl von Beschleunigungssignalleistungen ist,

$$P_{rel}(k) = \frac{P(k)}{\overline{P}} - 1 \qquad (3)$$

wobei Prel(k) ein Schadensindikator des k-ten Zahns ist.

9. Zahnradausfallbestimmungssystem (30) gemäß Anspruch 8, wobei die Zahnradausfallbestimmungsvorrichtung (10) weiterhin eine Bestimmungseinheit (12) umfasst, um auf der Grundlage des Schadensindikators zu bestimmen, ob der k-te Zahn beschädigt ist oder nicht.

**Revendications**

1. Dispositif de mesure (100) pouvant être attaché à une face latérale d'une partie de palier, la partie de palier étant adaptée pour supporter un arbre (24a) sur lequel se trouve un engrenage (22) de manière à ce que l'arbre puisse tourner, le dispositif de mesure comprenant :

un couvercle (110) attaché à une bague extérieure de la partie de palier pour couvrir la face latérale de la partie de palier ;
un capteur d'accélération (441) disposé sur une face intérieure du couvercle pour mesurer des vibrations de la partie de palier ;
un capteur d'angle (443) disposé sur la face intérieure du couvercle pour mesurer un angle entre la bague extérieure de la partie de palier et une bague intérieure de la partie de palier ; et
une unité de collecte de données (456) disposée sur la face intérieure du couvercle,
**caractérisé en ce que**
l'unité de collecte de données (456) est configurée pour obtenir l'accélération mesurée par le capteur d'accélération et l'angle mesuré par le capteur d'angle de manière liée, en partageant une base de temps commune, sous la forme de paires angle-accélération synchronisées dans le temps.

2. Dispositif de mesure selon la revendication 1, dans lequel le capteur d'accélération détecte des vibrations transmises à la partie de palier par les dents de l'engrenage pour mesurer l'accélération de l'engrenage, et le capteur d'angle mesure un angle de rotation d'une bague intérieure de la partie de palier par rapport à la bague extérieure de la partie de palier.

3. Dispositif de mesure selon la revendication 1 ou 2, dans lequel l'unité de collecte de données comprend :

une unité de commande (456) pour relocaliser l'accélération mesurée et l'angle mesuré à partir du capteur d'accélération et du capteur d'angle au moyen d'un DMA (accès direct à la mémoire) ; et
une mémoire (452) pour recevoir l'accélération mesurée et l'angle mesuré à partir du capteur d'accélération et du capteur d'angle, respectivement, et pour stocker l'accélération mesurée et l'angle mesuré sous la forme de paires angle-accélération synchronisées dans le temps.

4. Dispositif de mesure selon l'une des revendications 1 à 3, dans lequel le dispositif de mesure (100) comprend en outre un générateur d'impulsions (444) pour générer une impulsion lorsqu'une bague intérieure de la partie de palier tourne de 360 degrés, et
l'unité de collecte de données (456) obtient l'accélération mesurée par le capteur d'accélération et l'angle mesuré par le capteur d'angle de manière liée sur la base de l'impulsion générée par le générateur d'impulsions.

5. Dispositif de mesure selon l'une des revendications 1 à 4 comprenant en outre une unité de génération d'énergie (149) pour générer de l'électricité sur la base des rotations relatives entre la bague extérieure et une bague intérieure de la partie de palier afin d'alimenter en électricité le capteur d'accélération, le capteur d'angle et l'unité de collecte de données.

6. Dispositif de mesure selon l'une des revendications 1 à 5 comprenant en outre une unité de communication (453) pour envoyer l'accélération mesurée et l'angle mesuré à une unité de détermination de défaillance (10) à partir de l'unité de collecte de données (452).

7. Dispositif de mesure selon la revendication 6, dans lequel l'unité de communication (453) utilise Bluetooth® Low Energy, ZigBee® ou Thread pour envoyer l'accélération mesurée et l'angle mesuré à l'unité de détermination de défaillance (10) à partir de l'unité de collecte de données (452).

8. Système de détection de défaillance d'engrenage (30) comprenant le dispositif de mesure selon l'une des revendications 1 à 7 et un dispositif de détermination de défaillance d'engrenage (10) pour déterminer la défaillance d'un engrenage (22) sur la base de l'accélération mesurée et de l'angle mesuré reçus du dispositif de mesure, le dispositif de détermination de défaillance d'engrenage (10) comprenant :

une unité d'entrée (11) pour saisir un nombre de dents de l'engrenage ;
une unité de génération de carte (12) pour générer une carte qui définit la relation entre les dents de l'engrenage et un angle de rotation d'un arbre (24a) sur lequel l'engrenage est monté ;
une première unité de calcul (12) pour calculer une puissance d'un signal d'accélération à l'aide d'une équation (1) ;
une deuxième unité de calcul (12) pour calculer une puissance moyenne du signal d'accélération à l'aide d'une équation (2) ; et
une troisième unité de calcul (12) pour calculer un indicateur de dommage des dents à l'aide d'une équation (3),

$$P_{(tooth=k)} = \frac{1}{n_{samples,k}} \sum_{i=0}^{n_{samples}} s(i)^2$$

$$(1)$$

où $P_{(tooth=k)}$ est une puissance de signal d'accélération d'une k-ième dent de l'engrenage, s(i) est l'accélération mesurée de la k-ième dent, et $n_{samples,k}$ est un nombre de l'accélération mesurée de la k-ième dent,

$$\bar{P} = \frac{1}{Z} \sum_{k=1}^{Z} P(k)$$

$$(2)$$

où $\bar{P}$ est une puissance moyenne du signal d'accélération de la k-ième dent, P(k) est la puissance de signal d'accélération de la k-ième dent, et Z est un nombre de la puissance de signal d'accélération,

$$P_{rel}(k) = \frac{P(k)}{\overline{P}} - 1$$

$$(3)$$

où $P_{rel}(k)$ est un indicateur de dommage de la k-ième dent.

9. Système de détection de défaillance d'engrenage (30) selon la revendication 8, le dispositif de détermination de défaillance (10) comprenant en outre une unité de détermination (12) pour déterminer si la k-ième dent est endommagée ou non, sur la base de l'indicateur de dommage.

FIG. 1

# FIG. 2

EP 4 127 642 B1

## FIG. 3

## FIG. 4

# FIG. 5A

# FIG. 5B

FIG. 6

# FIG. 7

THE VOLTAGE OF THE CONDENSER

START POWER SUPPLY

J3
J2
J1

$V_3$
$V_2$
$V_1$

STOP POWER SUPPLY

TIME

H

CHARGE COMPLETION SIGNAL

L

$t_1$ $t_2$

TIME

EP 4 127 642 B1

# FIG. 8

# FIG. 9

# FIG. 10

# FIG. 11

```
                    ┌─────────────────┐
                    │      START      │
                    └─────────────────┘
                              │
                              ▼
          S1        ╱───────────────────╲
                   ╱      INTERVAL        ╲      NO
                   ╲   TIME HAS PASSED    ╱─────────────┐
                    ╲        ?           ╱              │
                      ╲───────────────╱                │
                              │ YES                     │
                              ▼                         │
          S2        ╱───────────────────╲               │
                   ╱       DID IT         ╲      NO      │
                   ╲   DETECT Z PHASE     ╱──────┐       │
                    ╲        ?           ╱       │       │
                      ╲───────────────╱          │       │
                              │ YES               │      │
                              ▼                   │      │
          S3   ┌──────────────────────────┐       │      │
               │  ANGLE SENSOR ACTIVATION │       │      │
               └──────────────────────────┘       │      │
                              │                    │      │
                              ▼◄──────────────────┘      │
          S4        ╱───────────────────╲               │
                   ╱       DID IT         ╲      NO      │
                   ╲   DETECT Z PHASE     ╱──────────────┤
                    ╲        ?           ╱               │
                      ╲───────────────╱                 │
                              │ YES                      │
                              ▼                          │
          S5   ┌──────────────────────────┐              │
               │     START MEASUREMENT     │              │
               └──────────────────────────┘              │
                              │                           │
                              ▼                           │
          S6   ┌──────────────────────────┐              │
               │       DATA TRANSFER       │──────────────┘
               └──────────────────────────┘
```

31

# FIG. 12

(B)

(A)

(C)

# FIG. 13

MEASUREMENT

510 — INPUT PARAMETERS
- NUMBER OF TEETH
- OPTIONALLY:ANGULAR OFFSET OF TEETH

$a(t_1)$  $\phi(t_1)$  $t_1$
$a(t_2)$  $\phi(t_2)$  $t_2$
$a(t_3)$  $\phi(t_3)$  $t_3$
...  — 500

520 — A) GENERATION OF ANGLE TO TOOTH MAPPING FUNCTION

B) CALCULATION OF PER-TOOTH MEAN ACCELERATION SIGNAL POWER — 530

$\Sigma a^2$, tooth 1  $n_{values, tooth\ 1}$
$\Sigma a^2$, tooth 2  $n_{values, tooth\ 2}$
$\Sigma a^2$, tooth 3  $n_{values, tooth\ 3}$
... — 540

C) CALCULATING RELATIVE SIGNAL POWER VALUES — 550

## FIG. 14

## FIG. 15

## FIG. 16

Bearing std eval (sum vec, comps 0-mean) $P_{rel,max}$ : 3.72 at ang. offset 6.

DAQ freq: 5376 Hz, Rng: 4.0 g, n: 1461.35 /min, T: 1000.00 Nm

**REFERENCES CITED IN THE DESCRIPTION**

**Patent documents cited in the description**

- JP 2017018128 A
- JP 2017181282 A
- JP 2019180183 A
- US 2008033695 A1
- EP 3457106 A1